# EUROPEAN PATENT APPLICATION

(11) **EP 2 141 387 A1**
(43) Date of publication of application: **06.01.2010**
(21) Application number: 09460018.6
(22) Date of filing: 24.04.2009
(51) Int. Cl.: F16H 39/32, F16H 39/28, F16H 47/02

(54) **Step-less hydrostatic gear box for rotary movement**

(30) Priority: 14.05.2008 PL 38517908
(71) Applicant: Zaleski, Jacek, 1223 Cologny/Geneva (CH)
(72) Inventor: The designation of the inventor has not yet been filed
(74) Representative: Szymanski, Roman

(57) **Abstract**

The hydrostatic system for the step less rotary movement transmission contains two hydrostatic motors with radial pistons (1 and 2) connected in push-pull configuration, the oil distribution system and the system for elimination of air and other volatile substances from the working spaces. The input of the gear box is connected to the engine (M) and the output is connected to the external load (W). In this push-pull configuration of both hydrostatic motors (1 and 2), the stators (1a and 2a) of both hydrostatic motors (1 and 2) are the active part of the gear box, while, the mounted on one and the same driven shaft (3) rotors (1b and 2b) of both hydrostatic motors (1 and 2) are the passive part of the system. In this configuration, the connection (4) containing the planetary gear box (4a) with the transmission ratio 1:-1 and the shafts (4b) mounted in housing (4c). It creates the situation that the stators (1a and 2a) of both hydrostatic motors have the same rotary speed but in the opposite direction. The first stator (1a) is connected to the engine (M). The common driven shaft (3 of the rotors (1b and 2b) of the both hydrostatic motors (1 and 2) is connected to the external load (W) on the output of the system. Such a configuration of the both hydrostatic motors (1 and 2) guarantees efficient control of the expected top value of the rotary speed (it protects agains over speeding). If this system is implemented in the vehicle, the driver can brake it by using only the energy of the engine (M). The system of the new gear box is completely symmetric and all the functions are placed in one line. This gives the more smoothly transmission of the rotary movement and gives the longer live for all elements of the whole system.

## Description

The subject of the presented invention is the step-less hydrostatic gear box for the rotary movement transmission SLGB - "Step Less Gear Box", based on two hydrostatic rotary motors with the radial pistons.
The publication WO/1986/004306 presents the solution of the hydrostatic driving system of a slip-steered vehicle, comprising two controllable hydraulic pumps, which are preferably mounted on one and the same driven shaft, a pair of hydraulic motors at each side of the vehicle. Each of the said pairs being connected with a hydraulic pump of its own, whereby each hydraulic motor is arranged so as to drive at least one wheel. The invention is **characterized in that** the two hydraulic pumps are connected to the corresponding pairs of hydraulic motors via a closed system of pipes and valves, which permits switching over from hydraulic motors connected in parallel to hydraulic motors connected in series.
The publication WO/1996/000865 presents the solution of an automatic, Inertial, Continuously Variable, Hydrostatic Transmission (C.V.T.) for motor vehicles, comprises a pair of reversible vane pump/motor (A, B) units, connected in a closed circuit. The vane pump/motor (A, B) units, are of the new "moving side" type, with fixed eccentricity. The driving pump/motor unit (A) is driven by the engine and via a torque-sensitive inertial connection, comprising a screw, a nut and a pressure spring, moves through the hydrostatic fluid, the motor/pump (B) of the wheel. An alternative embodiment lacks the torque-sensitive connection, and the transmission ratio is varied continuously, but it is done manualy without the use of a clutch.
The publication WO/1998/049470 presents a multi-range, synchronous shifting, hydromechanical transmission for application in an automotive drivetrain. The transmission receives split power inputs from the engine; one input being geared down to a lower speed for driving a continuously variable hydrostatic transmission unit, while the other input drives a counter shaft from which mechanical outputs are taken at different speed ratios. A planetary gear set, driven by the hydrostatic transmission unit, is shiftable to provide either a low continuously variable speed hydrostatic output, suitable for transmission operation in low output ranges or a high continuously variable speed hydrostatic output, suitable for transmission operation in high output ranges. A gear system includes a plurality of gearsets selectively controlled by clutches and brakes to combine the hydrostatic and the mechanical outputs to produce four continuously variable forward ranges and one continuously variable reverse range.

The aim of the invention is to create the gear box, which can be easy adapted to the hybrid solution by using brush-less electric motors. The gear box should have high efficiency comparable with the efficiency of the gear boxes based on the gear wheel system; it should have a simple construction and relatively small dimensions. The new gear box according to the invention should be not sensitive for overloading and in the same time should protect the driving system against any damage.

The main point of the solution of the hydrostatic system for step-less transmission of the rotary movement are the two hydrostatic motors with radial piston connected in push-pull configuration. In this configuration the stators of the both hydrostatic motors are the active part of the system, while the both rotors mounted on one and the same driven shaft are the passive part of the system. The system of hydrostatic motors is connected on one side with the engine and on the other side with the load. Due to the invention, both stators are turning with the same rotary speed but in the opposite direction. The main part with the hydrostatic motors contains: Servo system, system for the oil distribution and system for elimination of air or any other volatile substances from the working space of the installation. Referring to the next point of the invention, inside of each hydrostatic motor there are special devices which guarantee the tightness in each position between the upper part of the radial piston and the surface of the stator. Referring to the next point of the invention, the system of oil distribution contains series of valves placed inside of each rotor and all valves are connected to the servo system. Referring to the next point of the invention, the side of each radial piston is separated from the surface of the housing of the piston in such a way that the oil has the free flow between the bottom part of housing and the working space but only on the one side of each radial piston. The contact between the top of each radial piston and the surface of the stator is performed by the rods placed on the spring system in the upper part of each radial piston. Referring to the next point of the invention, the contact between the radial piston and the housing of the piston is done by special sliding plates. Referring to some other point of the invention, the contact between the radial piston and the housing for the piston is done by the linear ball bearings and placed in the bottom of each housing for radial pistons separating plates which slide inside the radial piston. Referring to some other feature of the invention, the oil distribution system contains on both side of each rotor special phase rings connected to the servo system and turning from 0° to 60°. The inside curvature of the each phase ring corresponds to the inside curvature of the stator. The phase rings are connected permanently with the related guiding system of the radial pistons and they are placed in the side covers of each stator.

The advantage of the new solution is that by using SLGB system, there is possible to replace the low efficiency reciprocating engine by the internal combustion turbine. The SLGB gear box allows the turbine to work on the high and constant rotary speed and separates it in mechanical way from the external load. If these conditions are full field, the consumption of the fuel will be lower than in the reciprocating engine in the same power class and the turbine will be separated from damaging unexpected change of the load.

Some other advantage of the invention is the easy adaptation of the SLGB system to the hybrid solution. The SLGB gear box in a special configuration can be implemented in big hydrokinetic turbines in order to dump the vibrations as well as to protect the turbine against any damage in case of some unexpected big change of the external load.

The extra advantage of the new solution is that SLGB gear box gives the possibility to brake the moving vehicle by using only the energy of the engine or if the engine is switched off, only by using the SLGB system. This option allows braking the vehicle without generating any thermal energy inside the system.

The full control of the rotary speed is performed in the hydrostatic part of the system on relatively low rotary speed (in the low rotary speed part of the system). This option is obtains by special configuration of the system which makes that the hydrostatic part of the system works always on relatively low rotary speed, even if the rotary speed of the rest of the whole system is high.

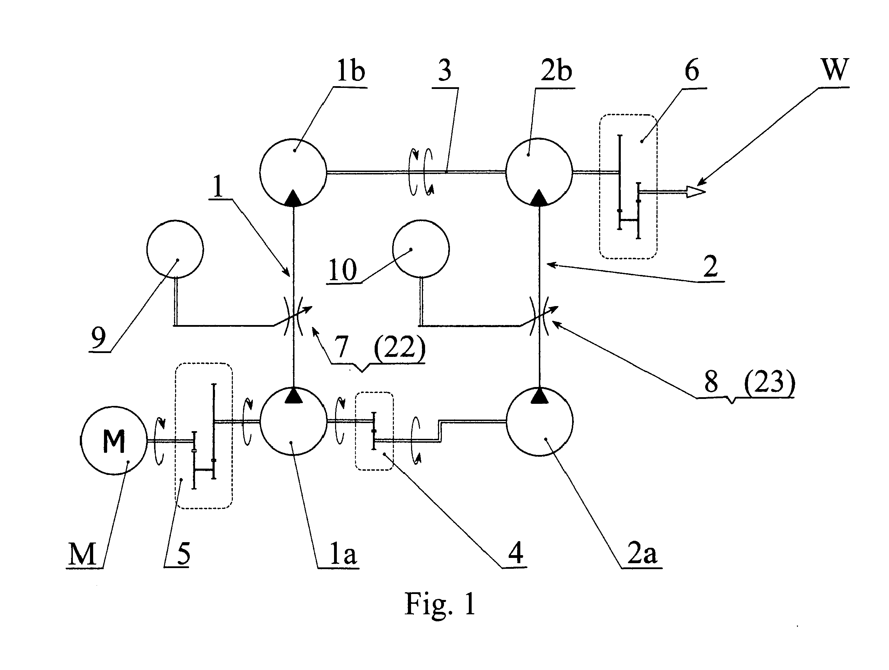

The object of the invention will be presented with the help of drawings. There are two versions which will be analyzed. There exist also some other version which are not analyzed in this application. The first version is with the valve's control system and the second one is with the phase control system. The drawing fig. 1 shows the kinetic schema of the step less gear box. The kinetic schema is the same for both versions of the invention.

The significant advantage of the SLGB gear box is the fact, that the current gear is always in optimal position. The system is "elastic". If the stored energy is higher or lower than the energy demanded by the load, the servo system immediately adapts the transmission ratio of the gear to the optimal conditions. The stored energy is always equal with the consumed energy. When the system is well adjusted, the effect of overloading or overheating never appears. This leads to the lower energy consumption and automatically less pollution of the environment.

One of the important advantages of the new hydrostatic gear box is the possibility of the continuously control and measurement of the transmitted torque. This is performed by pressure measurement inside the working space of both hydrostatic motors. This pressure is relative to the transmitted torque. Some other important advantage of the new hydrostatic gear box is the fact, that the source of energy (engine) is completely separated in mechanical way from the external load (wheels of the vehicle). This means that the wheels of the vehicle even on the very steep road (going down) cannot act in mechanical way on the engine. This option guarantees much higher driving security, even if the engine is switched off. Both hydrostatic motors are able to control completely the rotary speed of the vehicle's wheels.

An unexpected result concerning the energy generated during braking process or during a violent acceleration of the vehicle has been obtained in the new invention. The accurate analyze of the new construction shows in synonymous way, that, there is no place in the whole system in which the process of generation of thermal energy could appear and lead to the lowering efficiency and also overheating the gear box. The whole system besides the situation where both servo systems are in completely open position works in so called locked position. Taking into consideration the fact that the oil does not contain any volatile substances or air and following Newton's third principle of dynamic (each action is equivalent with the same reaction), there is no possibility of generating thermal energy. Admitting that oil does not contain any air, it can be analyzed in some aspects like a solid body. The results of the mentioned analyze can be also presented with the help of the functioning physical model. The locked position is visible in the clear way when the system is in so called closed position. In any other position it is necessary to introduce in this analyze the time intervals where the time will be treated as an independent variable. If now in the current working space will be done assumption that the time of each interval approach zero (t → 0), the number of these intervals will approach infinity (n → ∞). In each of this intervals there is so called locked position where of course the third principle of Newton is fulfilled. Summarizing this analyze, the system does not generate any thermal energy or expressing this meaning in different way, it generate as much energy as the car which is parked on the steep road or the metal cube which is squeezed in the press in the condition that no deformation will be done in the perpendicular direction to the acting force.

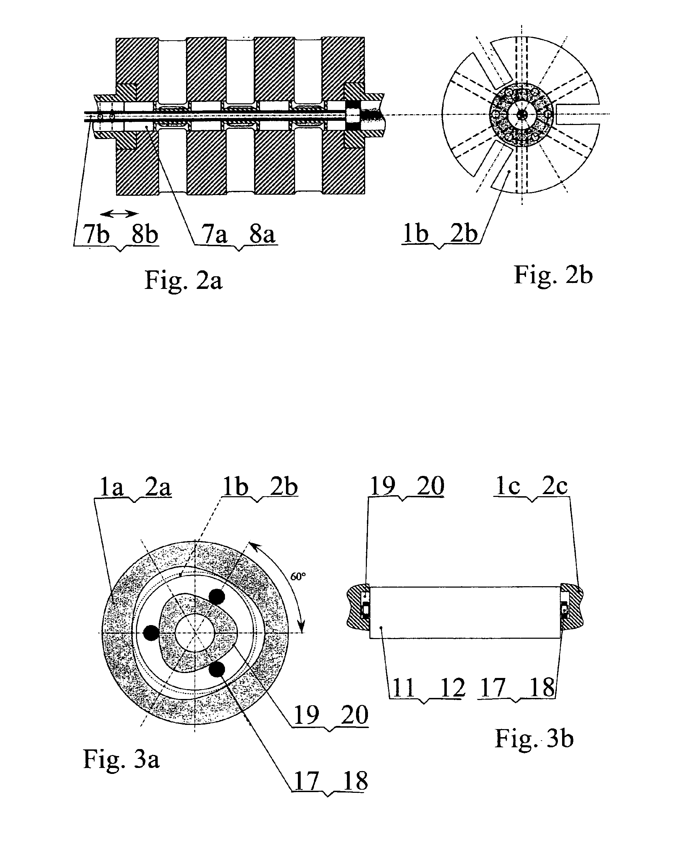

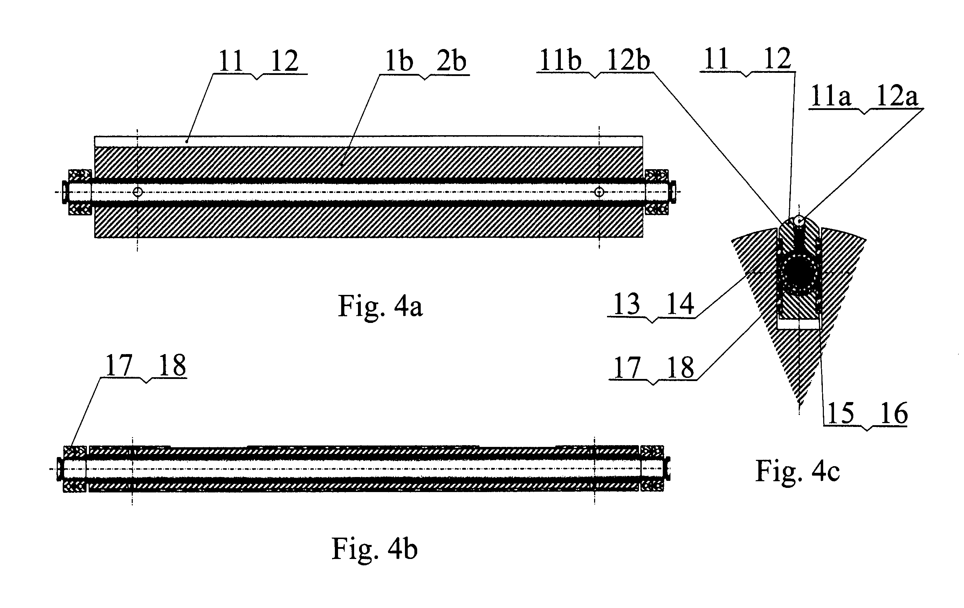

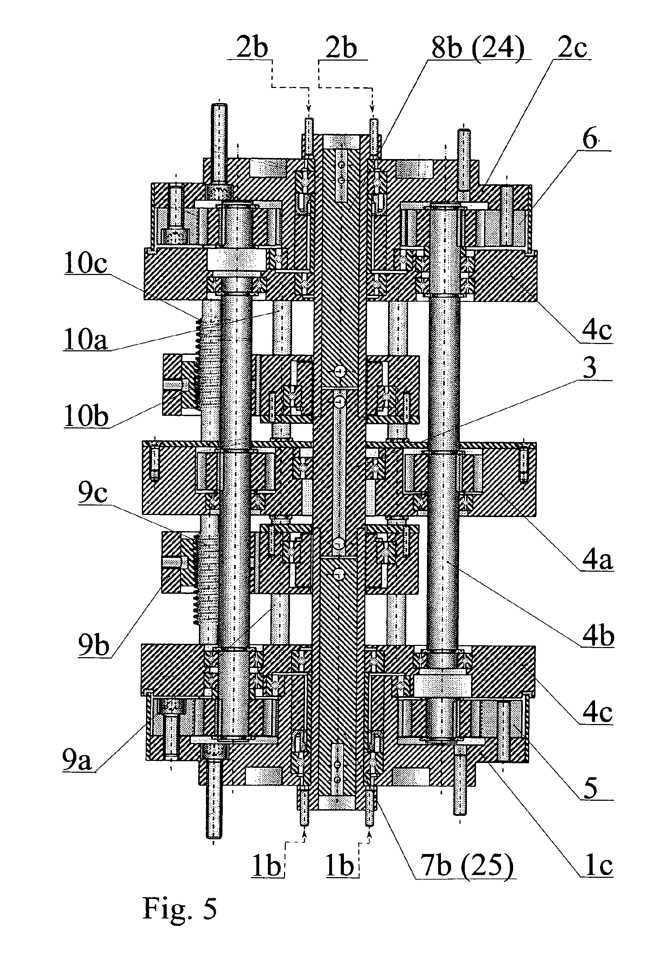

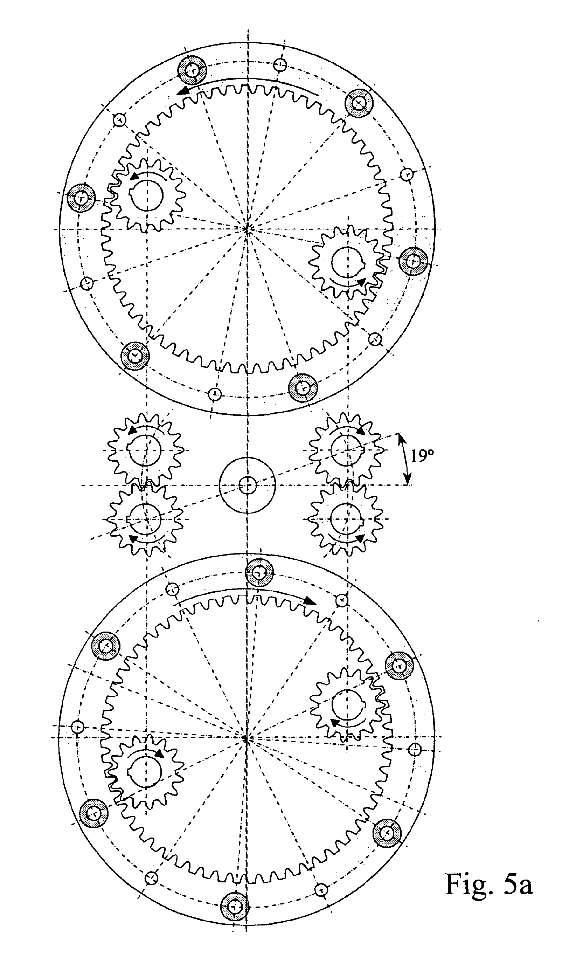

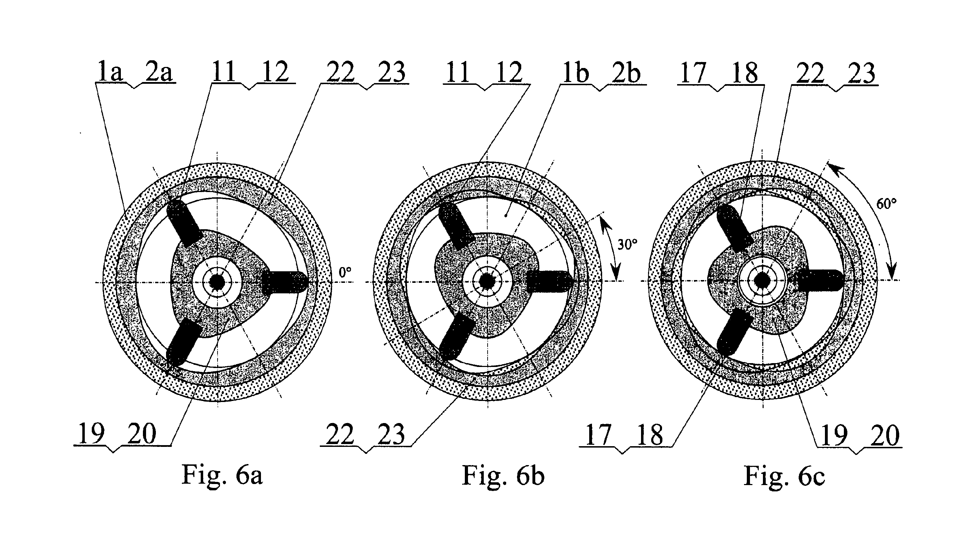

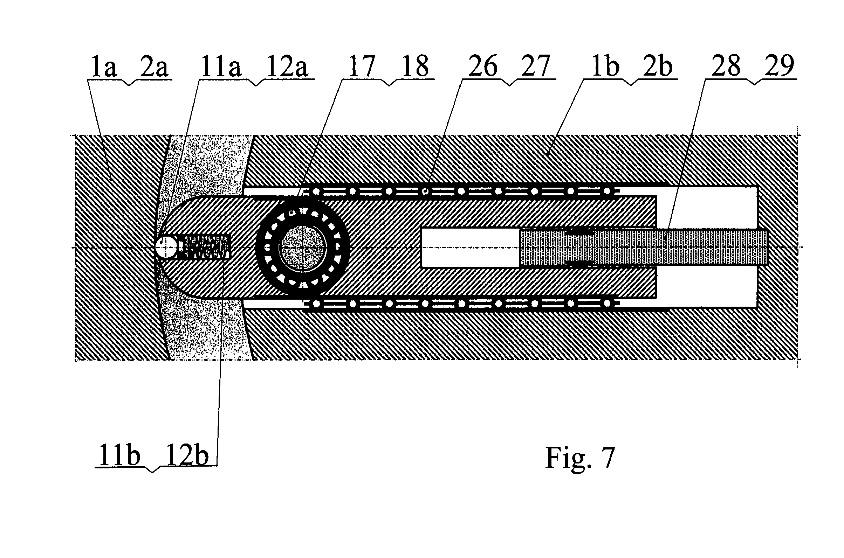

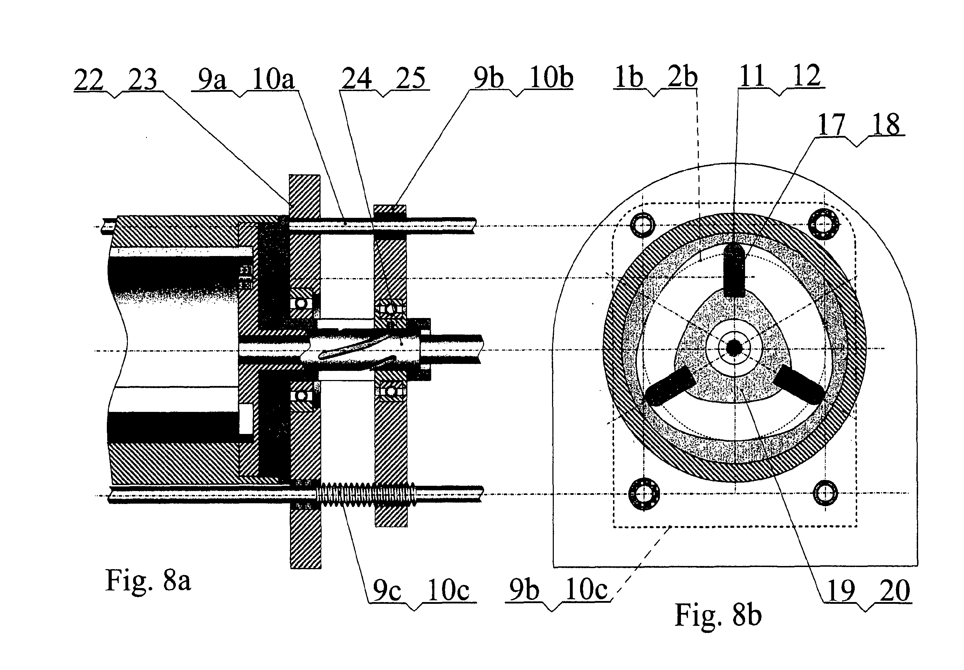

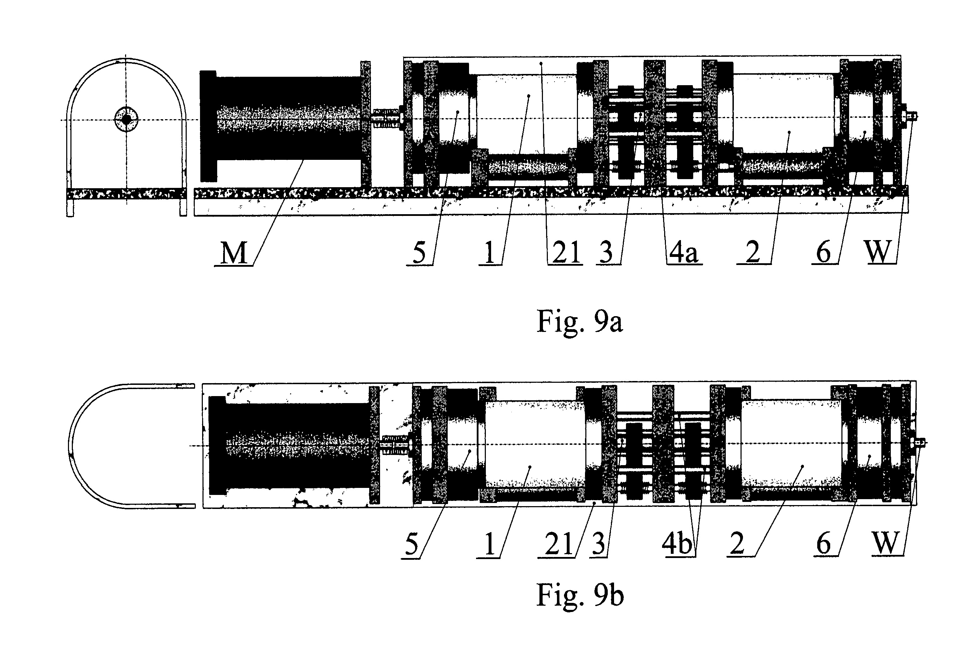

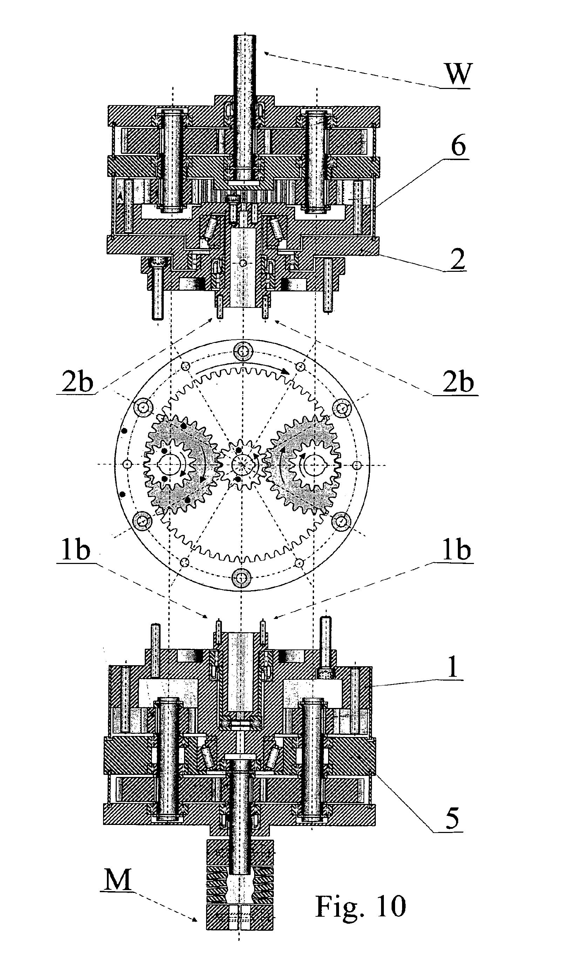

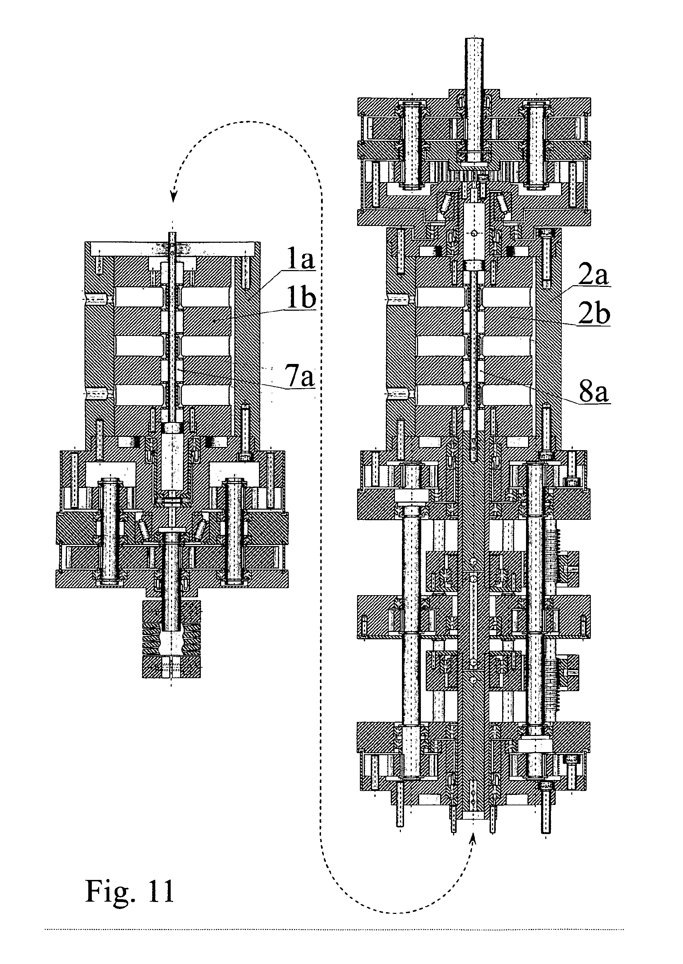

The drawings fig. 2a and fig. 2b show the assemblage of elements used in the oil distribution system according to the first version of the invention. The drawings fig. 3a and fig. 3b show the assemblage of elements used in the oil distribution system according to the second version of the invention. The drawings fig. 4a, fig. 4b and fig. 4c show the sub-assembly of the rotary piston inside the housing according to the first version of the invention. The drawing fig. 5 shows the longitudinal profile of the push-pull connection of both hydrostatic motors, while fig. 5a shows the configuration of the gear wheels of the planetary system placed in the push-pull connection. The drawings fig. 6a, fig. 6b and fig. 6c show the assemblage of elements used in the oil distribution system according to the second version of the invention. The drawing fig. 7 shows the sub-assembly of the rotary piston inside the housing according to the second version of the invention. The drawings fig. 8a and fig. 8b show the end side of one of the hydrostatic motors according to the second version. The drawings fig. 9a and fig. 9b show the top and the side view of the whole system according to the first version of the invention. The drawing fig. 10 shows the configuration of the elements on the input and the output of the system. This configuration is the same for both versions. The drawing fig. 11 shows the longitudinal profile of the whole system according to the first version of the invention.

### Version 1.

The hydrostatic step less system for rotary movement transmission according to the first version of the invention contains two hydrostatic motors 1 and 2 connected in push-pull configuration connected to the engine M on the input and to the external load W on the output, the system of oil distribution and the system for elimination of air and volatile substances from the working space. In this push-pull configuration of both hydrostatic motors 1 and 2 the stators 1a and 2a are the active parts of the gear box, while the rotors 1b and 2b which are mounted on one and the same driven shaft 3 are the passive parts of the gear box. In this configuration the connection 4 containing the planetary gear box 4a with the transmission ratio 1:-1 and shafts 4b placed in a special housing 4c creates the situation that the stators of both hydrostatic motors have the same rotary speed but in the opposite direction. The first stator 1a is connected to the engine M. The common shaft of the rotors 1b and 2b of both hydrostatic motors 1 and 2 is connected to the external load W on the output of the system. This configuration of both hydrostatic motors guarantees efficacious control of the expected top value of the rotary speed (it protects against over speeding). If the new system will be installed in the vehicle, the driver can brake it by using only the energy of the engine M. The system of new gear box is completely symmetric and all the functions are placed in one line. This gives the more smoothly transmission of the rotary movement and gives the longer live for all elements of the whole system.

The hydrostatic pumps 1 and 2 with radial pistons are working in this case as hydrostatic motors. The stator 1a is connected to the engine M through the planetary gear box 5 which is reducing the rotary speed in the transmission ratio 8:1. The rotor 2b is connected with the external load through the planetary gear box 6 which is increasing the rotary speed in the transmission ratio 1:8. The solution with reducing planetary gear box 5 and increasing planetary gear box 6 guarantees that the hydrostatic part of the system works always on the relatively low rotary speed.
The oil distribution system of both hydrostatic motors 1 and 2 contains the valve systems 7 and 8 placed inside of each rotor 1b and 2b. The valves 7a and 8a are connected to the servo systems 9 and 10 through the shafts 7b and 8b. The servo systems 9 and 10 determine the position of the valves 7a and 8a. The servo systems 9 and 10 contain the blocks 9b and 10b which are sliding on four sliding shafts 9a and 9b and they are connected through the trapezoid screws 9c and 10c with the servomotors 9d and 10d. In order to change the position of the valves 7a and 8a the shafts 7b and 8b perform a linear movement inside of each turning rotor 1b and 2b.

The construction of the valve's system 7 and 8 is done in such a way that the distance between two neighboring working spaces is limited to the minimum. This solution eliminates the risk of turbulent oil flow and in the same time guarantees the high efficiency of the gear box.

The radial pistons 11 and 12 are placed in the housings of rotors 1b and 2b in such a way that the flat parts of each piston are sliding on the side surface of the housing. The contact between the side of the piston and the side of the housing is performed through the sliding plates 13, 14, 15 and 16. In the bigger units the sliding blocks can be replaced by the linear ball bearings 26 and 27. In this case on the bottom of each housing 1b and 2b there are installed special separating plates 28 and 29 which slide inside radial pistons 11 and 12. These plates are eliminating the risk of none controlled flow of oil between two neighboring working spaces. In order to avoid the jam effect of the radial piston 11 and 12 with sliding plates 13, 14, 15 and 16, in the housings 1b and 2b, the flat part of the radial piston is partially separated from the side surface of the housing 1b and 2b in such a way that the oil can move between the working space and the bottom of each responding housings 1b and 2b, but only on one side of each radial piston 11 and 12. This solution eliminates the possibility of generation of volatile substances inside the system. Without this solution during movement of the radial piston 11 and 12 down in the housing, the oil in the bottom part of the housing will be pressured very much. This will lead to the situation that the temperature of the oil in the bottom part of the housing will increase dramatically and some volatile substances would be generated. During the movement of the radial piston up, in the bottom part of each housing will appears vacuum. This can also lead to the generation of volatile substances.

The contact between the radial pistons 11 and 12 and the inside surface of each stator 1a and 2a is performed through the rods 11a and 12a placed in the radial pistons 11 and 12. The rods are placed in the top part of each radial piston on the spring system 11b and 12b which allows the radial movement of the rods in the interval ±0,1 mm. On the both sides of each radial piston 11 and 12 there are placed ball bearings 17 and 18 which are turning on the surface of the piston guiding system 19 and 20. The piston guiding system 19 and 20 is connected permanently with the side cover 1c and 2c of each stator 1a and 2a. The current minimal position of each radial piston 11 and 12 inside the housing 1b and 2b is determined by the curvature of the piston guiding system 19 and 20 on which the ball bearings 17 and 18 placed on each side of the radial piston 11 and 12 are turning. The current maximal position of each radial piston 11 and 12 inside the housing 1b and 2b is determined by the curvature of the inside surface of the stator 1a and 2a. The hydrostatic pumps 1 and 2 with the radial pistons 11 and 12 work as hydrostatic motors in push-pull configuration. If both hydrostatic motors 1 and 2 are in position completely open in which the whole oil pass through the openings in rotors 1b and 2b, there are no forces which act on the radial pistons 11 and 12 and between the engine M and the output W of the gear box no rotary movement is transmitted. If the hydrostatic motor 1 is in position completely closed in which the whole oil acts on the radial piston 11 and the hydrostatic motor 2 is in position completely open in which the whole oil pass through the openings in rotors 2b and does not act on the radial piston 12, the rotary movement of the engine M is directly transmitted to the output W of the gear box. If the hydrostatic motor 1 is in position completely open in which the whole oil pass through the openings in rotor 1b and does not act on the radial piston 11, and the hydrostatic motor 2 is in position completely closed in which the whole oil acts on the radial piston 12, the rotary movement of the engine M is also directly transmitted to the output W of the gear box, but the direction of the rotary movement is the opposite to the direction of the rotary movement of the engine M. If the both hydrostatic motors are in position symmetrical and partially open, the system acts as a brake, where the closer are both hydrostatic motors, the higher is the braking force. The situation where the both hydrostatic motors 1 and 2 are in position completely closed is not recommended. Such a situation is only allowed when the vehicle is parked. In this case the system can take the function of the parking brake. This option has an advantage in cold countries during winter time. When the temperature is very low and the parking brakes are in use there is the risk that the braking blocks will freeze fast to the disc, making impossible to start the vehicle.

All the other non symmetric and partially open positions of the both hydrostatic motors 1 and 2 give on the output W of the gear box different rotary speed compare to the rotary speed of the engine M. If the vehicle with implemented SLGB gear box moves forward, the hydrostatic motor 1 is the real transmitter of the torque (it works as an engine), while the hydrostatic motor 2 gives only the necessary opposite torque in order to avoid non controlled over speed on the output of the system. If the vehicle moves backward, the hydrostatic motor 2 takes over the functions of the hydrostatic motor 1 and the hydrostatic motor 1 takes over the functions of the hydrostatic motor 2.

The position of the valves 7 and 8 are controlled by the electronic system which continuously measures the rotary speed of the engine M, the expected rotary speed on the output W of the gear box, the external load and the transmitted torque. The rotary speed of the hydrostatic part of the gear box is eight times lower than the rotary speed of the engine M, respectively the rotary speed on the output W of the gear box. The ratio of the gear can be higher or lower than eight. It depends of the size of the gear box, the power class of the engine and the maximum rotary speed limit of the engine. This configuration with decreasing and increasing rotary speed makes the whole control of the gear box more efficient and easier.

The hydrostatic part of the gear box is submerged in the vessel 21 which is completely filled up with oil. This solution allows elimination of air and other volatile substances from the hydrostatic part of the system. If the hydrostatic part of the system is not hermetic enough, there is no risk that the system will suck air from outside. It can only suck the oil from vessel 21. If the working space in the hydrostatic part does not contain any air or other volatile substances, there is no generation of thermal energy and the gear box does not lose the efficiency.

### Version 2

The hydrostatic step less system for the rotary movement transmission according to the first version of the invention contains two hydrostatic motors 1 and 2 connected in push-pull configuration connected to the engine M on the input and to the external load W on the output, the system of oil distribution and the system for elimination of air and volatile substances from the working space. In this push-pull configuration of both hydrostatic motors 1 and 2 the stators 1a and 2a are the active parts of the gear box, while the rotors 1b and 2b which are mounted on one and the same driven shaft 3 are the passive parts of the gear box. In this configuration the connection 4 containing the planetary gear box 4a with the transmission ratio 1:-1 and shafts 4b placed in a special housing 4c creates the situation that the stators of both hydrostatic motors have the same rotary speed but in the opposite direction. The first stator 1a is connected to the engine M. The common shaft of the rotors 1b and 2b of both hydrostatic motors 1 and 2 is connected to the external load W on the output of the system. This configuration of both hydrostatic motors guarantees efficacious control of the high value of the rotary speed (it protects against over speeding). If the new system will be installed in the vehicle, the driver can brake it by using only the energy of the engine M. The system of the new gear box is completely symmetric and all the functions are placed in one line. This gives the more smoothly transmission of the rotary movement and gives the longer live for all elements of the whole system. The hydrostatic pumps 1 and 2 with radial pistons are working as hydrostatic motors. The stator 1a is connected to the engine M through the planetary gear box 5 which reduces the rotary speed in the transmission ratio 8:1. The rotor 2b is connected with the external load through the planetary gear box 6 which increases the rotary speed with the transmission ratio 1:8. The solution with reducing planetary gear box 5 and increasing planetary gear box 6 guarantees that the hydrostatic part of the system works always on the relatively low rotary speed. The configuration with decreasing and increasing rotary speed makes the control of the gear box more efficient and easier.

The oil distribution system of both hydrostatic motors 1 and 2 contains on both sides of each rotor 1b and 2b the phase rings 22 and 23 which turn from 0° to 60°. The inside curvature of each phase ring corresponds to the inside curvature of each stator 1a and 2a. If the phase rings 22 and 23 are in 0° position there is so called position completely closed in which the whole oil acts on the radial pistons 11 and 12. If the phase ring 22 and 23 is in position 0° < ϕ < 60°, there is so called position partially open. In this version the function of valves is taken by the opening between the top of the pistons 11 and 12 and the inside surface of the stator 1a and 2a. The size of the opening is controlled by the servo system. In the position partially open the part of the oil pass through the opening between the top of the radial pistons 11 and 12 and the inside surface of the stator 1a and 2a to the neighboring working space while the rest of the oil act on the radial pistons 11 and 12. If the phase ring 22 and 23 is in position 60°, there is so called position completely open: All pistons are hidden inside the housings in rotors 1b and 2b and the whole oil pass from one to the other neighboring working space. In this position the rotary movement of the stators 1a and 2a has no influence on the rotary movement of the rotors 1b and 2b. In order to have the position of both phase ring 22 and 23 of each hydrostatic motor in the same phase, both of them are permanently connected to each other. They are also connected permanently with the piston guiding system 19 and 20. The phase of the phase ring 22 and 23 are always equal with the phase of the curvature of the respective piston guiding system 19 and 20. The both phase rings are placed inside the stators 1a, respectively 2a. The position of the phase rings 22 and 23 are controlled by servo systems 9 and 10 which determine the position of the respective phase shafts 24 and 25. The parts of the phase shafts 24 and 25 containing six rows placed like in the worm screw are on both sides of the stators 1a and 2a. The servo systems 9 and 10 contains sliding blocks 9b and 10b which are sliding on the sliding shafts 9a and 10a. The sliding blocks 9b and 10b belonging to the same hydrostatic motor 1 respective 2 are connected to the servo motors 9d and 10d through the trapezoid screws 9c and 10c. The linear movement of the phase shafts 24 and 25 inside the rotating main shaft is performed by the contact with the sliding blocks 9b and 10b. In the version with phase rings 22 and 23 the oil pass directly from one to the other neighboring working space, which means that even if the rotary speed is very high there is no risk of the turbulent oil flow and in the same time it guarantees the high efficiency of the gear box.

The radial pistons 11 and 12 are placed in the housings of rotors 1b and 2b in such a way that the flat parts of each piston are sliding on the side surface of the housing. The contact between the side of the piston and the side of the housing is performed through the sliding plates 13, 14, 15 and 16. In the bigger units the sliding blocks can be replaced by the linear ball bearings 26 and 27. In this case on the bottom of each housing 1b and 2b there are installed special separating plates 28 and 29 which slide inside the radial pistons 11 and 12. These plates eliminate the risk of none controlled flow of the oil between two neighboring working spaces. In order to avoid the jam effect of the radial piston 11 and 12 with sliding plates 13, 14, 15 and 16, in the housings 1b and 2b, the flat part of the radial piston is partially separated from the side surface of the housing 1b and 2b in such a way that the oil can move between the working space and the bottom of each responding housings 1b and 2b, but only on one side of each radial piston 11 and 12. This solution eliminates the possibility of generation of volatile substances inside the system. Without this solution during movement of the radial piston 11 and 12 down in the housing, the oil in the bottom part of the housing will be pressured very much. This will lead to the situation that the temperature of the oil in the bottom part of the housing will increase dramatically and some volatile substances would be generated. During the movement of the radial piston up, in the bottom part of each housing will appears vacuum. This can also lead to the generation of volatile substances.

The contact between the radial pistons 11 and 12 and the inside surface of each stator 1a and 2a is performed through the rods 11a and 12a placed in the radial pistons 11 and 12. The rods are placed in the top part of each radial piston on the spring system 11b and 12b which allows the radial movement of the rods in the interval ±0,1 mm. On the both sides of each radial piston 11 and 12 there are placed ball bearings 17 and 18 which are turning on the surface of the piston guiding system 19 and 20. The piston guiding system 19 and 20 is connected permanently with the side cover 1c and 2c of each stator 1a and 2a. The current minimal position of each radial piston 11 and 12 inside the housing 1b and 2b is determined by the curvature of the piston guiding system 19 and 20 on which the ball bearings 17 and 18 placed on each side of the radial piston 11 and 12 are turning. The current maximal position of each radial piston 11 and 12 inside the housing 1b and 2b is determined by the curvature of the inside surface of the stator 1a and 2a. The position of the phase rings 22 and 23 is determined by the electronic system, which continuously controls the rotary speed of the engine M, the expected rotary speed on the output W of the gear box, the external load and the transmitted torque.

The hydrostatic part of the gear box is submerged in the vessel 21 which is completely filled up with oil. This solution allows elimination of air and other volatile substances from the hydrostatic part of the system. If the hydrostatic part of the system is not hermetic enough, there is no risk that the system will suck air from outside. It can only suck the oil from vessel 21. If the working space in the hydrostatic part does not contain any air or other volatile substances, there is no generation of thermal energy and the gear box does not lose the efficiency.

## Claims

1. The step-less hydrostatic gear box for the rotary movement transmission SLGB consisting of connected with the engine and the external load two combined together rotating hydrostatic motors with radial pistons and the oil distribution system, servo system and system for elimination of air and volatile substances from working space and at the same time the construction of rotating hydrostatic motors contains devices which guarantee the exact contact between the top of the radial pistons and the inside surface of the stators of the rotating hydrostatic motors, is significant due to the fact, that the both rotating hydrostatic motors (1 and 2) are connected in push-pull configuration where the stators (1a and 2a) of both rotating hydrostatic motors (1 and 2) are the active part of the system, while the rotors (1b and 2b) of both rotating hydrostatic motors (1 and 2) mounted on one and the same driven shaft 3 are the passive parts of the system and at the same time the connection (4) of the stators (1a and 2a) of both rotating hydrostatic motors (1 and 2) in this configuration guarantees the same rotary speed but the opposite rotary direction.

2. The step-less hydrostatic gear box for the rotary movement transmission, according to the claim 1, is significant due to the fact that the connection (4) contains the planetary gear box (4a) and the shafts (4b) mounted in the housing (4c).

3. The step-less hydrostatic gear box for the rotary movement transmission, according to the claim 1 or 2, is significant due to the fact that the oil distribution system contains systems of the valves (7a and 8a) placed inside of each rotor (1b and 2b), where the shafts (7b and 8b) are connected to the servo systems (9 and 10).

4. The step-less hydrostatic gear box for the rotary movement transmission, according to the claim 3, is significant due to the fact that the flat part of the radial pistons (11 and 12) are separated from the surface of the housings in rotors (1b) and (2b) in such a way that there is free oil flow between the bottom of the housings of radial pistons (11 and 12) placed in the rotors (1b and 2b) and the working spaces, while the contact between radial pistons (11 and 12) and the inside surface of the stators (1a and 2a) is performed by the rods (11a and 12a) placed in the radial pistons (11 and 12) on the spring system (11 band 12b), it is necessary to stress that the free oil flow between the bottom of the housings of radial pistons (11 and 12) and the working spaces concerns only one side of each radial piston (11 and 12), oil has no possibility to pass this way from one to the other working space.

5. The step-less hydrostatic gear box for the rotary movement transmission, according to the claim 4, is significant due to the fact that the contact between the flat part of the radial pistons (11 and 12) and the surface of the housings placed in the rotors (1b and 2b) is performed by the sliding plates (13, 14, 15 and 16).

6. The step-less hydrostatic gear box for the rotary movement transmission, according to the claim 4, is significant due to the fact that the contact between the flat part of the radial pistons (11 and 12) and the surface of the housings placed in the rotors (1b and 2b) is performed by the linear ball bearings (26 and 27) and mounted in the bottom of each piston housing in the rotors (1b and 2b) the separating plates (28 and 29) which are sliding inside the radial pistons (11 and 12).

7. The step-less hydrostatic gear box for the rotary movement transmission, according to the claim 1 or 2, is significant due to the fact that the oil distribution system connected to the servo system (9 and 10) contains situated on both sides of the each rotor (1b and 2b) the turning from 0° to 60° phase rings (22 and 23), in which the inside curvature corresponds to the inside curvature of the stators (1a and 2a), in the same time the phase rings (22 and 23) are connected permanently with the respective piston guiding systems (19 and 20) placed in the side covers (1c and 2c) of the stators (1a and 2a).

8. The step-less hydrostatic gear box for the rotary movement transmission, according to the claim 7, is significant due to the fact that the flat part of the radial pistons (11 and 12) are separated from the surface of the housings in rotors (1b) and (2b) in such a way that there is free oil flow between the bottom of the housings of radial pistons (11 and 12) placed in the rotors (1b and 2b) and the working spaces, while the contact between radial pistons (11 and 12) and the inside surface of the stators (1a and 2a) is performed by the rods (11a and 12a) placed in the radial pistons (11 and 12) on the spring system (11b and 12b), it is necessary to stress that the free oil flow between the bottom of the housings of radial pistons (11 and 12) and the working spaces concerns only one side of each radial piston (11 and 12), oil has no possibility to pass this way from one to the other working space.

9. The step-less hydrostatic gear box for the rotary movement transmission, according to the claim 8, is significant due to the fact that the contact between the flat part of the radial pistons (11 and 12) and the surface of the housings placed in the rotors (1b and 2b) is performed by the sliding plates (13, 14, 15 and 16).

10. The step-less hydrostatic gear box for the rotary movement transmission, according to the claim 9, is significant due to the fact that the contact between the flat part of the radial pistons (11 and 12) and the surface of the housings placed in the rotors (1b and 2b) is performed by the linear ball bearings (26 and 27) and mounted in the bottom of each piston housing in the rotors (1b and 2b) the separating plates (28 and 29) which are sliding inside the radial pistons (11 and 12).

11. The step-less hydrostatic gear box for the rotary movement transmission, according to the claim 7, is significant due to the fact that the distance between two neighboring working spaces is diminished to the minimum, the distance of the oil flow corresponds to the thickness of the radial piston (11 and 12), this eliminates the risk of the turbulent oil flow, even if the rotary speed is very high.
